## Europäisches Patentamt
## European Patent Office
## Office européen des brevets

(19)

(11) Numéro de publication : **0 235 036 B1**

(12) # FASCICULE DE BREVET EUROPEEN

(45) Date de publication du fascicule du brevet :
**05.06.91 Bulletin 91/23**

(51) Int. Cl.⁵ : **H02K 49/04**

(21) Numéro de dépôt : **87400377.5**

(22) Date de dépôt : **20.02.87**

(54) **Perfectionnements aux rotors induits des ralentisseurs électromagnétiques.**

(30) Priorité : **21.02.86 FR 8602425**

(43) Date de publication de la demande :
**02.09.87 Bulletin 87/36**

(45) Mention de la délivrance du brevet :
**05.06.91 Bulletin 91/23**

(84) Etats contractants désignés :
**AT BE CH DE ES GB IT LI NL SE**

(56) Documents cités :
**DE-A- 2 921 887
FR-A- 1 147 449
FR-A- 1 170 961
FR-A- 1 543 369
FR-A- 2 044 114**

(73) Titulaire : **LABAVIA S.G.E.**
**5, avenue Newton Parc d'Activités
F-78180 Montigny le Bretonneux (FR)**

(72) Inventeur : **Estaque, Michel**
**76 Rue des Lilas
F-95150 Taverny (FR)**

(74) Mandataire : **Behaghel, Pierre et al**
**CABINET PLASSERAUD 84 rue d'Amsterdam
F-75009 Paris (FR)**

## Description

L'invention est relative aux rotors induits des ralentisseurs électromagnétiques, notamment pour véhicules, rotors comprenant au moins un disque en matière ferromagnétique propre à défiler en regard d'une couronne statorique de pôles électromagnétiques alternativement positifs et négatifs dont il n'est séparé que par un entrefer, ce disque étant alors freiné et échauffé du fait de la création de courants de Foucault dans sa masse.

Elle vise plus particulièrement, parmi ces rotors, ceux dont le disque est relié à une bague de fixation interne par une couronne de bras inclinés sur les rayons correspondants de façon à former des ailettes de ventilation, les portions de plus grand diamètre de ces bras faisant saillie axialement sur la face du disque opposée à l'entrefer, et les crêtes de ces portions étant réunies entre elles par une joue annulaire.

L'ensemble du disque, de la bague, des bras et de la joue est généralement constitué par un seul bloc moulé en acier.

L'évacuation des calories engendrées dans le disque d'un tel rotor par les courants de Foucault, lors de la mise en service du ralentisseur équipé de ce rotor, se fait essentiellement par conduction vers la joue à travers les bras et par rayonnement et convection à partir du disque, des bras et de la joue, ce dernier phénomène étant fortement renforcé par ventilation : en effet le profil d'ailettes adopté pour les bras fait jouer au rotor un rôle de ventilateur en balayant par un courant d'air de refroidissement les surfaces chaudes à refroidir du disque, des bras et de la joue, surfaces qui délimitent alors des canaux pour ledit courant d'air.

Dans les modes de réalisation connus (voir le document FR-A-2 218 686), les faces délimitant intérieurement les canaux de ventilation ne présentent pas d'aspérités notables et le refroidissement du disque laisse à désirer.

C'est ainsi que ce disque peut être porté au rouge, sa température atteignant ou même dépassant une valeur de l'ordre de 700°C, alors que la joue demeure à une température inférieure à 500°C.

Or, il importe de refroidir efficacement le disque.

En effet, le couple de ralentissement susceptible d'être engendré par le ralentisseur équipé de ce disque est réduit dans une proportion considérable lorsque ce disque s'échauffe.

C'est ainsi que ce couple peut décroître d'une valeur C à une valeur C/3, pour des valeurs données de la vitesse de rotation et de la puissance électrique consommée, lorsque le disque s'échauffe de la température ambiante à une température de l'ordre de 700°C.

Il était déjà connu par le document FR-A-1170961 de ménager des stries sur une surface plane à refroidir faisant partie du rotor d'un ralentisseur à courants de Foucault, stries pour lesquelles le rapport entre l'espacement des nervures successives et la hauteur de ces nervures est de l'ordre de l'unité.

L'invention a pour but, surtout, d'améliorer le refroidissement du disque au cours du fonctionnement du ralentisseur et donc d'augmenter la valeur du couple à chaud engendré par cet appareil sans pour autant accroître de façon sensible le couple nécessaire à l'entraînement du ralentisseur.

A cet effet, les rotors du genre en question selon l'invention sont essentiellement caractérisés en ce que l'une au moins des faces délimitant intérieurement les canaux de ventilation est striée ou ondulée par des nervures parallèles s'étendant selon une direction inclinée sur la direction de circulation de l'air dans ces canaux, l'angle formé entre chaque flanc de nervure et la portion de face contiguë étant au plus égal à 90°, et le rapport entre l'espacement des nervures successives et la hauteur de ces nervures étant compris entre 5 et 15.

Dans des modes de réalisation préférés, on a recours en outre à l'une et/ou à l'autre des dispositions suivantes :

– le rapport ci-dessus est de l'ordre de 10,

– la hauteur de chaque nervure est comprise entre 2 et 5 mm,

– les nervures sont prévues sur la face plane, du disque, la plus éloignée de l'entrefer, et sont annulaires et concentriques,

– les nervures sont prévues sur les ailettes et s'étendent selon la direction axiale,

– les nervures sont prévues sur la face, de la joue, située du côté du disque et sont annulaires et concentriques,

– les nervures présentent en section droite la forme d'un triangle,

– les nervures présentent en section droite la forme d'un rectangle,

– les nervures présentent en section droite une forme sensiblement sinusoïdale,

– les nervures forment un seul bloc avec les faces sur lesquelles elles font saillie.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention en se référant aux dessins ci-annexés d'une manière bien entendu non limitative.

Les figures 1 et 2, de ces dessins, montrent un rotor de ralentisseur électromagnétique établi conformément à l'invention respectivement en demi-vue en bout selon la flèche I de la figure 2 et en demi-coupe axiale selon II-II figure 1, le stator correspondant étant en outre représenté partiellement en spectre sur la figure 2.

Les figures 3 et 4 sont des variantes également

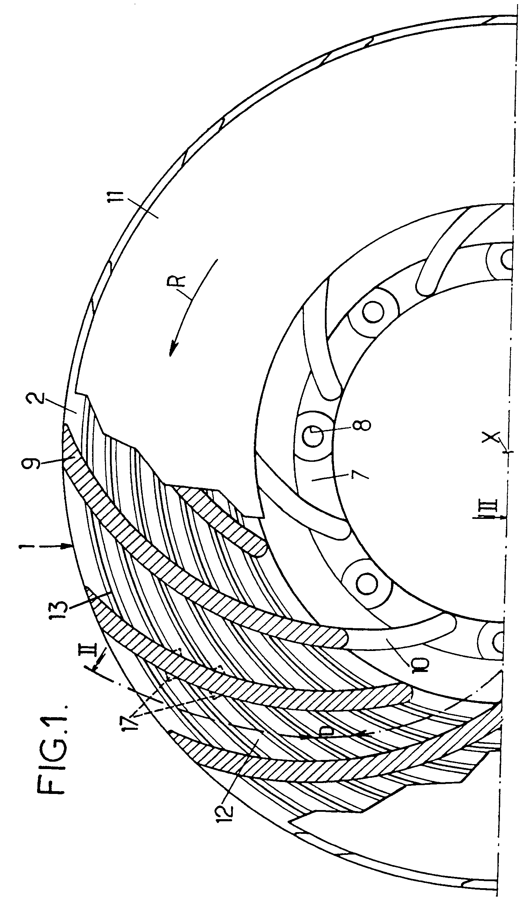

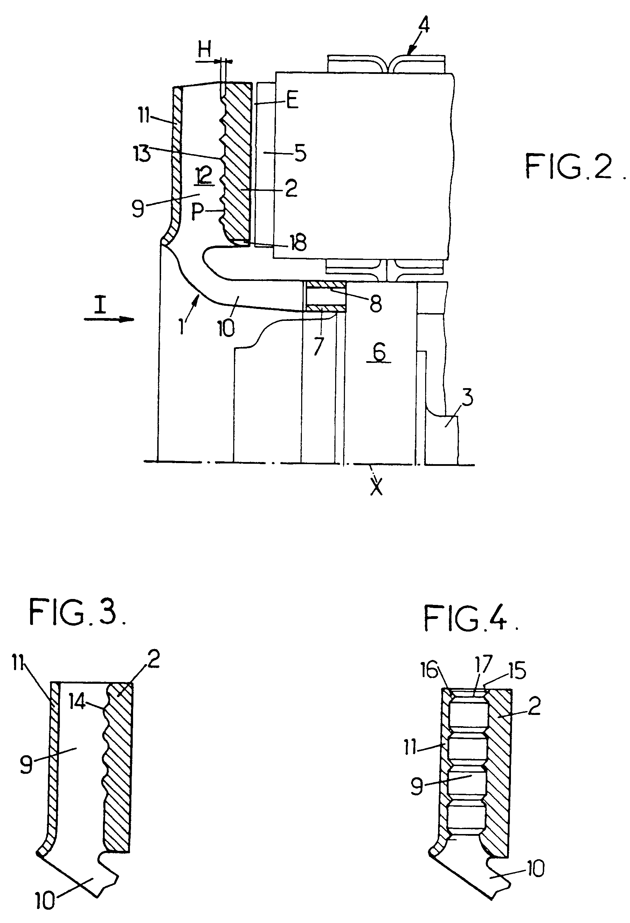

Dans le mode de réalisation illustré sur les figures 1 et 2, c'est la face plane P du disque 2 opposée à l'entrefer E qui est striée.

Ces stries se présentent sous la forme de nervures 13 annulaires et concentriques d'axe X faisant directement saillie sur ladite face plane P.

La section droite de chaque nervure affecte ici la forme d'un triangle isocèle dont l'angle au sommet est droit ou sensiblement tel : la crête de chaque nervure se présente alors sous la forme d'une arête vive et aiguisée à la façon de celles des couteaux de balance prismatique.

Dans la variante représentée sur la figure 3, les nervures considérées sont encore prévues sur la face, du disque 2, la plus éloignée de l'entrefer E, mais ces nervures ne sont plus ici délimitées par des arêtes vives, mais par des ondulations concentriques 14 dont le profil ou section selon un plan axial présente une forme sinueuse ou sinusoïdale.

Selon une autre variante particulièrement avantageuse, qui n'a pas été représentée, les nervures présentent en section droite une forme rectangulaire, la hauteur de ces nervures étant avantageusement un peu plus grande que leur largeur.

Dans la variante représentée sur la figure 4, on trouve encore des stries à arêtes vives constituées par des nervures 15 à profil triangulaire du genre des nervures 13 ci-dessus mais le disque 2 n'est plus le seul à être strié : on trouve des nervures 16 et 17 analogues aux nervures 15 respectivement sur la face, de la joue 11, tournée vers le disque 2 et sur les faces latérales des ailettes 9.

Les nervures 16 prévues sur la joue 11 sont, comme les nervures 15, annulaires et concentriques autour de l'axe X.

Quant aux nervures 17, leurs crêtes s'étendent axialement, c'est-à-dire selon une direction perpendiculaire au plan moyen du disque 2.

Quelques-unes de ces nervures 17 ont été représentées en traits mixtes sur la figure 1.

Dans le mode de réalisation illustré sur la figure 4, les nombres des nervures (15,16,17) prévues respectivement sur les quatre faces délimitant un même canal 12 sont les mêmes et leurs crêtes se prolongent de proche en proche en délimitant ensemble des sortes de diaphragmes d'étranglement successifs pour l'air en circulation dans le canal concerné.

En suite de quoi, et quel que soit le mode de réalisation adopté, on dispose finalement d'un rotor induit de ralentisseur électromagnétique dont la constitution, le fonctionnement et les avantages (notamment l'amélioration du couple de décélération à chaud) résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :

– celles où les ailettes 9 seraient creusées par des poches débouchant à l'air libre à travers des fentes évidées dans la joue 11, les fonds de ces poches étant constitués par le disque 2,

– et/ou celles où les ailettes 9 seraient constituées par plusieurs tronçons décalés entre eux et se chevauchant radialement en partie.

A toutes fins utiles, on signale qu'il a déjà été proposé de prévoir des nervures concentriques sur la face plane, d'un disque induit du genre défini ci-dessus, la plus éloignée de l'entrefer, mais ces nervures se présentaient sous la forme de gouttières ouvertes vers l'axe du disque de façon à constituer des réceptacles pour un liquide de refroidissement : il ne s'agissait donc aucunement d'améliorer le coefficient d'échange thermique entre le disque et l'air de ventilation.

## Revendications

1. Rotor induit de ralentisseur électromagnétique comprenant au moins un disque (2) relié à une bague de fixation interne (7) par une couronne de bras (9, 10) inclinés sur les rayons correspondants de façon à former des ailettes de ventilation, les portions de plus grand diamètre (9) de ces bras faisant saillie axialement sur le disque et leurs crêtes étant réunies entre elles par une joue annulaire (11), cette joue délimitant avec le disque et avec les portions d'ailettes qui la relient à ce disque des canaux (12) pour l'air de ventilation, caractérisé en ce que l'une au moins des faces délimitant intérieurement les canaux de ventilation (12) est striée ou ondulée par des nervures parallèles (13-16) s'étendant selon une direction inclinée sur la direction de circulation de l'air dans ces canaux (12), l'angle formé entre chaque flanc de nervure et la portion de face contiguë étant au plus égal à 90°, et le rapport entre l'espacement (D) des nervures successives et la hauteur (H) de ces nervures étant compris entre 5 et 15.

2. Rotor selon la revendication 1, caractérisé en ce que le rapport (D/H) est de l'ordre de 10.

3. Rotor selon l'une quelconque des précédentes revendications, caractérisé en ce que la hauteur (H) de chaque nervure est comprise entre 2 et 5 mm.

4. Rotor selon l'une quelconque des précédentes revendications, caractérisé en ce que les nervures (13) sont prévues sur la face plane, du disque (2), la plus éloignée de l'entrefer (E), et sont annulaires et concentriques.

5. Rotor selon l'une quelconque des précédentes revendications, caractérisé en ce que les nervures (17) sont prévues sur les ailettes (9) et s'étendent selon la direction axiale.

6. Rotor selon l'une quelconque des précédentes revendications, caractérisé en ce que les nervures

conformes à l'invention de la portion supérieure gauche de la figure 2.

Le mot "rotor" utilisé dans le présent texte désigne plus précisément chacun des sous-ensembles monoblocs 1 qui sont compris par l'ensemble rotorique d'axe X d'un ralentisseur électromagnétique ou à "courants de Foucault" et qui comportent un disque induit 2 en matériau ferromagnétique.

Comme on le sait, un tel disque 2 est solidarisé avec l'arbre 3 à ralentir, tel que l'arbre de transmission d'un véhicule, et il est monté de façon à pouvoir défiler devant le stator 4 du ralentisseur, ou plus précisément devant une couronne de pôles inducteurs 5 alternativement positifs et négatifs faisant partie de ce stator, avec interposition d'un entrefer E, le disque 2 en question étant alors le siège de courants de Foucault qui se traduisent par un freinage et un échauffement de ce disque.

L'ensemble rotorique du ralentisseur comprend, en plus du rotor ou sous-ensemble défini ci-dessus, lequel est unique ou de préférence dédoublé symétriquement de part et d'autre du stator, une pièce intermédiaire 6 de révolution autour de l'axe X, telle qu'un manchon, moyeu ou plateau, elle-même fixée, généralement par boulonnage, sur l'arbre 3 à ralentir, chaque "rotor" 1 ici considéré étant de son côté fixé par boulonnage sur cette pièce intermédiaire.

D'une façon encore connue en soi, chaque rotor 1 comprend, en plus du disque 2, et venues de moulage avec ce disque :
– une bague de fixation 7 de diamètre moyen inférieur au diamètre intérieur du disque 2, percée d'alésages axiaux 8, filetés ou non, destinés à recevoir des boulons (non représentés) de fixation de cette bague sur la pièce intermédiaire 6,
– une couronne d'ailettes de ventilation 9 faisant saillie sur la face, du disque 2, opposée à sa face destinée à délimiter l'entrefer E, certaines au moins de ces ailettes (notamment une sur deux ou une sur trois) étant prolongées vers l'axe X de façon à former des bras 10 reliant le disque à la bague 7,
– et une jante ou joue annulaire 11 s'étendant en général parallèlement au disque et reliant les crêtes des portions de plus grand diamètre des ailettes 9 de façon à former entre ces ailettes, le disque et la joue des canaux de guidage 12 pour l'air de ventilation.

Les ailettes 9 et les bras 10 qui les prolongent éventuellement sont inclinés et de préférence incurvés vers l'arrière par rapport au sens de rotation R du rotor, si l'on considère les rayons croissants.

Les bras 10 sont de préférence axialement coudés, comme dans le mode de réalisation illustré sur la figure 2, de façon à "rentrer" axialement la bague 7 vers l'intérieur du stator et à réduire ainsi l'encombrement axial de la portion centrale du rotor.

Mais lesdits bras 10 pourraient également être "droits", leurs lignes moyennes demeurant alors sensiblement contenues dans un même plan transversal.

Le nombre des bras 10 de chaque rotor est avantageusement égal à huit et le nombre total de ses ailettes 9, à seize ou vingt-quatre.

C'est l'évacuation des calories engendrées dans le disque 2 par la création des courants de Foucault lors des mises en service du ralentisseur que la présente invention se propose d'améliorer.

A cet effet l'on prévoit sur certaines au moins des faces délimitant intérieurement les canaux de ventilation 12 des stries ou ondulations constituées par des nervures parallèles qui s'étendent selon des directions inclinées sur la direction de circulation de l'air dans ces canaux.

Ces nervures présentent une faible hauteur et sont relativement écartées les unes des autres.

C'est ainsi :
– que la distance D séparant deux nervures successives (13 sur la figure 1) et comptée selon la direction de circulation des filets d'air dans le canal 12 est comprise entre 5 et 15 fois la hauteur H de chaque nervure comptée perpendiculairement au plan de la face P, c'est-à-dire axialement (voir figure 2),
– et que la hauteur H est généralement de l'ordre de 2 à 5 mm.

De préférence le rapport D/H est de l'ordre de 10, et la distance D, de l'ordre de 30 à 40 mm.

L'expérience montre qu'une telle mesure améliore dans une proportion notable le refroidissement du disque tout en augmentant seulement dans une proportion négligeable le couple nécessaire à l'entraînement du rotor du fait d'un très léger accroissement des "pertes par ventilation".

Cette amélioration du refroidissement, c'est-à-dire de l'échange thermique entre l'air de ventilation et le rotor, est due essentiellement aux raisons suivantes :
– les crêtes des nervures cassent les couches limites formées par les courants d'air le long des faces métalliques à refroidir,
– l'écartement relatif de ces nervures permet aux filets d'air provenant des couches limites ainsi cassées d'évoluer ou tourbillonner librement entre ces nervures et ainsi de balayer efficacement les surfaces métalliques comprises entre ces dernières et de se mélanger aux filets d'air adjacents,
– toutefois, vu leur faible hauteur, les nervures ne constituent pas d'obstacle susceptible d'accrocher l'air de ventilation au point d'augmenter dans une proportion non négligeable le couple d'entraînement du rotor à froid.

Il est à noter que ladite amélioration du refroidissement est donc due à un accroissement du coefficient d'échange thermique entre l'air de ventilation et le rotor et pratiquement pas à un accroissement des surfaces d'échange.

(16) sont prévues sur la face, de la joue (11), située du côté du disque (2) et sont annulaires et concentriques.

7. Rotor selon l'une quelconque des précédentes revendications, caractérisé en ce que les nervures présentent en section droite la forme d'un triangle.

8. Rotor selon l'une quelconque des revendications 1 à 6, caractérisé en ce que les nervures présentent en section droite la forme d'un rectangle.

9. Rotor selon l'une quelconque des revendications 1 à 6, caractérisé en ce que les nervures présentent en section droite une forme sensiblement sinusoïdale.

10. Rotor selon l'une quelconque des précédentes revendications, caractérisé en ce que les nervures forment un seul bloc avec les faces sur lesquelles elles font saillie.

## Ansprüche

1. Induzierter Läufer einer elektromagnetischen Bremse mit zumindest einer Scheibe (2), die mit einem inneren Befestigungsring (7) über einen Kranz von Armen (9, 10) verbunden ist, die gegen die entsprechenden Radien geneigt sind, um Ventilationsflügel zu bilden, wobei die Abschnitte größeren Durchmessers (9) dieser Arme von der Scheibe axial abstehen und ihre Scheitel untereinander durch einen Ringflansch (11) verbunden sind, wobei dieser Flansch mit der Scheibe und mit den Flügelabschnitten, welche ihn mit dieser Scheibe verbinden, Kanäle (12) für die Ventilationsluft bilden, dadurch gekennzeichnet, daß zumindest eine der Seiten, welche die Ventilationskanäle (12) im Inneren begrenzen, durch parallele Rippen (13-16) gerieft oder gewellt ausgebildet ist, die sich in einer Richtung erstrecken, welche zur Strömungsrichtung der Luft in diesen Kanälen (12) geneigt ist, wobei der Winkel, der zwischen jeder Rippenflanke und dem angrenzenden Abschnitt der Seite gebildet wird, höchstens gleich 90° beträgt, und das Verhältnis zwischen dem Abstand (D) aufeinanderfolgender Rippen und der Höhe (H) dieser Rippen zwischen 5 und 15 beträgt.

2. Läufer nach Anspruch 1, dadurch gekennzeichnet, daß das Verhältnis (D/H) in der Größenordnung von 10 liegt.

3. Läufer nach einem der vorhergehenden Ansprüche, dadurch gekennzeichnet, daß die Höhe (H) jeder Rippe zwischen 2 und 5 mm beträgt.

4. Läufer nach einem der vorhergehenden Ansprüche, dadurch gekennzeichnet, daß die Rippen (13) auf der vom Luftspalt (E) am weitesten entfernten ebenen Seite der Scheibe (2) vorgesehen und ringförmig sowie konzentrisch sind.

5. Läufer nach einem der vorhergehenden Ansprüche, dadurch gekennzeichnet, daß die Rippen (17) auf den Flügeln (9) vorgesehen sind und sich in axialer Richtung erstrecken.

6. Läufer nach einem der vorhergehenden Ansprüche, dadurch gekennzeichnet, daß die Rippen (16) auf der der Scheibe (2) zugekehrten Seite des Flansches (11) vorgesehen und ringförmig sowie konzentrisch sind.

7. Läufer nach einem der vorhergehenden Ansprüche, dadurch gekennzeichnet, daß die Rippen im Schnitt Dreieckform haben.

8. Läufer nach einem der Ansprüche 1 bis 6, dadurch gekennzeichnet, daß die Rippen im Schnitt Rechteckform haben.

9. Läufer nach einem der Ansprüche 1 bis 6, dadurch gekennzeichnet, daß die Rippen im Schnitt im wesentlichen Sinusform haben.

10. Läufer nach einem der vorhergehenden Ansprüche, dadurch gekennzeichnet, daß die Rippen einstückig mit den Seiten ausgebildet sind, von denen sie abstehen.

## Claims

1. Armature rotor for an electromagnetic retarder comprising at least one disc (2) connected to an inner fastening ring (7) by a ring of arms (9, 10) inclined to the corresponding radii so as to form ventilation fins, the portions of largest diameter (9) of these arms projecting axially on the disc and their crests being joined together by an annular web (11), this web bounding with the disc and with the portions of fins which connect it to this disc channels (12) for ventilation air, characterized in that one at least of the surfaces bounding the ventilation channels (12) internally is striated or ondulated by parallel ribs (13-16) extending in a direction inclined to the direction of flow of the air in these channels (12), the angle formed between each side of a rib and the portion of the contiguous surface being at the most equal to 90°, and the ratio between the spacing (D) of successive ribs and the height (H) of these ribs being comprised between 5 and 15.

2. Rotor according to claim 1, characterized in that the ratio (D/H) is of the order of 10.

3. Rotor according to anyone of the preceding claims, characterized in that the height (H) of each rib is comprised between 2 and 5 mm.

4. Rotor according to anyone of the preceding claims, characterized in that the ribs (13) are provided on the flat surface, of the disc (2), farthest from the air gap (E) and are annular and concentric.

5. Rotor according to anyone of the preceding claims, characterized in that the ribs (17) are provided on the fins (9) and extend in the axial direction.

6. Rotor according to anyone of the preceding claims, characterized in that the ribs (16) are provided on the surface, of the web (11), situated on the side of the disc (2) and are annular and concentric

7. Rotor according to anyone of the preceding claims, characterized in that the ribs have a cross-section in the form of a triangle.

8. Rotor according to anyone of claims 1 to 6, characterized in that the ribs have in cross-section the shape of a rectangle.

9. Rotor according to anyone of claims 1 to 6, characterized in that the ribs have in cross-section a substantially sinusoidal shape.

10. Rotor according to anyone of the preceding claims, characterized in that the ribs form a single unit with the surfaces on which they project.

FIG.1.

EP 0 235 036 B1

FIG.2.

FIG.3.

FIG.4.